# EUROPEAN PATENT APPLICATION

(11) **EP 4 454 989 A1**
(43) Date of publication of application: **30.10.2024**
(21) Application number: 21968845.4
(22) Date of filing: 21.12.2021
(51) Int. Cl.: B63B 49/00, B63B 79/15, B63B 1/18

(54) **PLANING BOAT SAILING ASSISTING DEVICE**

(71) Applicant: Yamaha Hatsudoki Kabushiki Kaisha, Iwata-shi, Shizuoka 438-8501 (JP)
(72) Inventor: HASEGAWA, Noriko, Iwata-shi, Shizuoka 438-8501 (JP)
(74) Representative: Grünecker Patent- und Rechtsanwälte PartG mbB
(86) International application number: PCT/JP2021/047270
(87) International publication number: WO 2023/119408

(57) **Abstract**

A planing boat sailing assisting device (1) includes a sensor (2) and a data processing apparatus (3) mounted on a planing boat (20). The sensor is configured to obtain not reflected light of laser light applied to a water surface (30) but natural visible light or infrared light coming from the water surface obliquely below the sensor, by means of a global shutter mechanism. The data processing apparatus obtains sensor-obtained data obtained by the sensor, at a frame rate of not lower than 10 FPS and not higher than 100 FPS, and generates wave data related at least to the height of a wave and the time until arrival of the wave based on obtained sets of sensor-obtained data, at least once in every second. The data processing apparatus outputs the generated wave data to at least one of the wave display or the controller.

## Description

### [Technical Field]

The present teaching relates to a planing boat sailing assisting device configured to assist sailing of a planing boat.

### [Background Art]

There have been known technologies that assist sailing of a ship by generating wave data related to waves based on data obtained by a sensor mounted on the ship. For example, according to technologies recited in Patent Literature 1 and Patent Literature 2, sailing of a ship is assisted by displaying, on a wave display, wave data generated based on data obtained by a camera mounted on the ship. According to a technology recited in Patent Literature 3, sailing of a ship is assisted in such a way that waves hitting the hull are predicted based on data obtained by a sensor and steering of the ship is controlled. According to a technology recited in Patent Literature 4, sailing of a ship is assisted in such a way that waves hitting the hull are predicted based on data obtained by a radar, and a warning is made or a steering method suitable for avoidance is displayed.

As shown in Non-Patent Literature 1, ships are classified into a displacement type, a semi-planing type, and a planing type. When sailing, a ship of the displacement type sails with the help of only static buoyancy, and no lift force is exerted to the ship. Medium to large-sized ships are of the displacement type. It is noted that a ship indicates a medium to large-sized ship in a narrow sense. A ship of the planing type sails with a lift force that supports the hull and is significantly larger than the buoyancy. A ship of the semi-planing type sails in such a way that several tenths of percent of the weight of the hull is supported by a lift force. In the present description, ships of the semi-planing type and ships of the planing type are collectively termed as planing boats. A planing boat is a small ship and is about 10 to 20 meters in length. Planing boats are higher in speed than small ships of the displacement type. A planing boat is larger than a medium to large-sized ship (ship of the displacement type) in terms of the speed length ratio that is the ratio of the speed to the square root of the length of the ship. In other words, planing boats are high in speed relative to the length of the boat.

### [Citation List]

### [Patent Literatures]

[Patent Literature 1] Japanese Laid-Open Patent Publication No. 2008-232860
[Patent Literature 2] Japanese Laid-Open Patent Publication No. S61-254813
[Patent Literature 3] Japanese Laid-Open Patent Publication No. S59-220497
[Patent Literature 4] Japanese Laid-Open Patent Publication No. 2004-338580

### [Non-Patent Literatures]

[Non-Patent Literature 1] Yamaha Hatsudoki Kabushiki Kaisha, "Running Characteristics and Shape of Ship Botom", [online], Yamaha Hatsudoki Kabushiki Kaisha, [retrieved on December 15, 2021], from the Internet, <URL: https://www.yamaha - motor.co.jp/marine/life/start/boat/characteristic.html>
[Non-Patent Literature 2] Yamaha Hatsudoki Kabushiki Kaisha, "Weather Forecast and Action in Response to Sudden Change of Weather", [online], April 1, 1998, Patent Association of Japan, [retrieved on December 15, 2021], from the Internet, <URL: https://www.yamaha-motor.co.jp/marine/life/technique/drive/weather.html>

### [Summary]

### [Technical Problem]

The acceleration and deceleration of such a planing boat is controlled in accordance with a head wave (head sea), as shown in Non-Patent Literature 2. To be more specific, for example, a planing boat is controlled to decelerate when the boat reaches the apex of a wave and to accelerate when the bow reaches the trough of the wave. Because planing boats are small in size and high in speed relative to the boat length, acceleration and deceleration of the boats need to be controlled even when waves are small (i.e., low). In other words, planing boats need to deal with waves that are smaller than waves with which medium to large-sized ships deal. In vicinity of a small wave, another small wave that is slightly different in speed tends to be generated. On this account, small waves tend to disappear or to be amplified on account of mutual interference. In short, small waves tend to irregularly change in a short time. Due to this, being different from medium to large-sized ships, planing boats are required to deal with small waves that irregularly change in a short time.

When the technology that assists sailing of a ship by generating wave data related to waves based on data obtained by a sensor is applied to a planing boat, it is necessary to secure the accuracy of observation of waves, even if the waves are small and irregularly change in a short time.

It is preferable that a data processing apparatus configured to generate wave data related to waves based on data obtained by a sensor has a high degree of freedom in designing hardware resource.

An object of the present teaching is to provide a planing boat sailing assisting device which makes it possible to secure the accuracy of observation of waves even if the waves are small and irregularly change in a short time, and to suppress reduction in degree of freedom in designing hardware resource.

### [Solution to Problem]

To achieve the object described above, the inventors of the subject application reviewed the technologies of Patent Literatures 1 to 4 in detail. Patent Literatures 1 to 4 fail to take into account that wave data related to small waves irregularly changing in a short time, which are typically dealt with by planing boats, are generated and the wave data is output to a wave display or a controller. In all of the technologies recited in Patent Literatures 1 to 3, a wave direction is calculated by chronologically observing a single wave, and small waves that irregularly change in a short time are not targets of observation. When small waves that irregularly change in a short time are included in waves that are chronologically observed in Patent Literatures 1 to 3, the number of waves that are targets of observation is large. To calculate the wave directions of such a large number of waves, a large amount of observation data must be acquired in a short time. On this account, a high-performance processor and a large-capacity memory are required, with the result that the degree of freedom in designing hardware resource is decreased. In Patent Literature 4, a radar configured to emit millimeter waves or microwaves is used as a sensor for observing waves. Typically, the radar performs beam scanning, and there is a time lag between beam emission and receiving of a reflected wave. On this account, it is difficult to accurately observe small waves that irregularly change in a short time, in data obtained by the radar. To accurately observe small waves that irregularly change in a short time based on data obtained by the radar, it is necessary to obtain a large number of signals and to perform complicated processing of the signals. A high-performance processor is required to do so, with the result that the degree of freedom in designing hardware resource is decreased.

(1) A planing boat sailing assisting device of an embodiment of the present teaching comprises:
   a sensor which is mounted on a planing boat and is configured to sense, from the planing boat, waves;
   and a data processing apparatus which is configured to generate wave data related to the waves around the planing boat based on data obtained by the sensor and output the wave data to at least one of a wave display or a controller, the wave display being configured to display information related to the waves in accordance with the wave data to assist sailing of the planing boat, and the controller being configured to control a propulsion unit of the planing boat in accordance with the wave data to assist the sailing of the planing boat, the sensor being an image sensor which is configured to obtain not reflected light of laser light applied to a water surface obliquely below the sensor but natural visible light or infrared light coming from the water surface obliquely below the sensor, by means of a global shutter mechanism, and the data processing apparatus including a processor which is configured to (i) obtain, at a frame rate of equal to or higher than 10 FPS and equal to or lower than 100 FPS, sensor-obtained data obtained by the sensor and related to the natural visible light or infrared light coming from the water surface obliquely below the sensor so that at least one of a state in which the waves disappear due to mutual interference between the waves or a state in which the waves are amplified due to mutual interference between the waves is observable, (ii) based on obtained sets of the sensor-obtained data, generate the wave data related at least to the height of a wave obliquely below the sensor and a time until arrival of the wave at the planing boat, at least once in every second, and (iii) output the generated wave data to at least one of the wave display or the controller.

As described above, being different from medium to large-sized ships, planing boats are required to deal with small waves that irregularly change in a short time. Such small waves that irregularly change in a short time tend to disappear or to be amplified on account of mutual interference between the waves. With the arrangement described above, the data processing apparatus obtains the sensor-obtained data at a frame rate equal to or higher than 10 FPS. It is therefore possible to observe at least one of the state in which the waves disappear due to mutual interference between the waves or the state in which the waves are amplified due to mutual interference between the waves. As the data processing apparatus obtains the sensor-obtained data at a frame rate equal to or higher than 10 FPS, it is possible to observe the waves accurately. In addition, with the arrangement described above, the data processing apparatus obtains the sensor-obtained data at a frame rate equal to or lower than 100 FPS. When the data processing apparatus obtains the sensor-obtained data at a frame rate of 100 FPS, the accuracy of the observation of the waves is sufficiently high. On this account, even if the frame rate is increased from 100 FPS, the accuracy of the observation of the waves is scarcely improved. On this account, as the frame rate at which the data processing apparatus obtains the sensor-obtained data, the range of equal to or higher than 10 FPS and equal to or lower than 100 FPS is an optimal range with which the waves are accurately observed and at the same time decrease in the degree of freedom in designing hardware resource of the data processing apparatus is suppressed.

According to the arrangement described above, the sensor sensing the waves is an image sensor which is configured to obtain not reflected light of laser light applied to a water surface obliquely below the sensor but natural visible light or infrared light coming from the water surface obliquely below the sensor, by means of a global shutter mechanism. On this account, as compared to a case where the sensor is a sensor configured to obtain reflected light of laser light applied to a water surface and a case where the sensor is a rolling shutter image sensor, it is possible to accurately observe small waves that irregularly change in a short time.

In this way, the planing boat sailing assisting device makes it possible to secure the accuracy of observation of the waves even if the waves are small and irregularly change in a short time, and to suppress reduction in degree of freedom in designing hardware resource of the data processing apparatus.

(2) In addition to the arrangement (1) above, the planing boat sailing assisting device of the embodiment of the present teaching may be arranged as described below.

The sensor is mounted on the planing boat so that the sensor is oriented obliquely downward within an angle of 45 degrees from a horizontal direction, when the planing boat is in a planing state.

With this arrangement, as compared to a case where the sensor is mounted on the planing boat so that the sensor is oriented obliquely downward at an angle larger than 45 degrees from the horizontal direction when the planing boat is in the planing state, it is possible to further accurately observe small waves that irregularly change in a short time.

(3) In addition to the arrangement (1) or (2) above, the planing boat sailing assisting device of the embodiment of the present teaching may be arranged as described below.

The sensor is a stereo camera.

With this arrangement, as compared to a case where the sensor is a monocular camera, it is possible to further accurately observe small waves that irregularly change in a short time.

(4) In addition to any one of the arrangements (1) to (3) above, the planing boat sailing assisting device of the embodiment of the present teaching may be arranged as described below.

The processor of the data processing apparatus is configured to output, to at least one of the wave display or the controller, the wave data related to at least one of the height of the wave obliquely below the sensor, the time until arrival of the wave at the planing boat, and a direction of the wave relative to the planing boat.

(5) In addition to any one of the arrangements (1) to (4) above, the planing boat sailing assisting device of the embodiment of the present teaching may be arranged as described below.

The processor of the data processing apparatus is configured to determine whether to output the generated wave data to at least one of the wave display or the controller, based on the generated wave data.

With this arrangement, it is possible to reduce the processing load on the data processing apparatus while securing the function of assisting the sailing of the planing boat. As a result, it is possible to suppress decrease in the degree of freedom in designing the hardware resource of the data processing apparatus.

In the present teaching and the embodiments, "processor" encompasses a microcontroller, a CPU (Central Processing Unit), a GPU (Graphics Processing Unit), a microprocessor, a multi processor, an application specific integrated circuit (ASIC), a programmable logic circuit (PLC), a field programmable gate array (FPGA), and other types of circuits capable of executing processes described in this specification.

In the present teaching and the embodiments, waves encompass not only waves formed by wind, weather, and tide, but also waves generated by wakes of the planing boat itself or another vessel. In the present teaching and the embodiments, an wave indicates a single wave crest. In the present teaching and the embodiments, the height of a wave indicates the difference between the apex of the wave and the trough of the next wave (i.e., the wave after wave crest). In the present teaching and the embodiments, wave data is data related at least to the height of a wave obliquely below a sensor and the time until arrival of the wave at the planing boat. The height of a wave indicates the difference between the wave and the trough of a wave closer to the planing boat than that wave. The wave obliquely below the sensor encompasses a wave traveling in a direction opposite to the traveling direction of the planing boat. The wave obliquely below the sensor may encompass a wave that is slower than the planing boat and travels in the same traveling direction as the planing boat. The wave data related to the height of a wave and the time until arrival of the wave at the planing boat is, for example, wave data that does not include data specifically indicating the height of the wave and is related to the time until arrival of a wave that has at least a predetermined height at the planing boat. The wave data related to the time until arrival of the wave at the planing boat may be, for example, wave data that includes data indicating the time until arrival, or wave data including data indicating the relative speed of a wave relative to the speed of the planing boat and the distance between the wave and the planing boat. The time until arrival can be calculated from the relative speed and the distance. The time until arrival of a wave at the planing boat indicates a time until the arrival of a certain portion of the wave at a certain portion of the planing boat. The time until arrival of a wave at the planing boat may be, for example, the time until arrival of the apex of the wave at the gravity center of the planing boat. In the present teaching and the embodiments, to generate wave data at least once in every second based on plural sets of sensor-obtained data indicates that each set of wave data is generated at least once in every second and each set of the wave data is generated based on plural sets of the sensor-obtained data. One set of wave data may relate to only one wave or to plural waves. When a set of wave data is generated for each wave, plural sets of wave data may be simultaneously generated.

In the present teaching and the embodiments, when a wave display displays information related to a wave in accordance with wave data in order to assist the sailing of a planing boat, the wave display may, for example, display information related to the wave in accordance with the wave data to allow an operator to operate the planing boat in accordance with the information displayed on the wave display. As another example, the wave display may display information related to a wave in accordance with wave data to allow an occupant who is not an operator to prepare for an action of the planing boat climbing over the wave, in accordance with the information displayed on the wave display. In the present teaching and the embodiments, when the controller controls a propulsion unit of a planing boat in accordance with wave data in order to assist the sailing of the planing boat, for example, the controller may control the propulsion unit in accordance with the wave data to assist the operation by an operator when the operator operates the boat. As another example, the controller may automatically control the propulsion unit in accordance with wave data. In this case, no operator may be required. The planing boat may be an unmanned automatically-operated ship. In the present teaching and the embodiments, sailing merely indicates that a ship advances, and does not indicate that a ship advances along a predetermined passage.

In the present teaching and the embodiments, natural visible light is, for example, visible light included in solar light. In the present teaching and the embodiments, to obtain not reflected light of laser light applied to a water surface obliquely below a sensor but natural visible light coming from a water surface obliquely below a sensor is, for example, to obtain solar light reflected on a water surface obliquely below a sensor. In the present teaching and the embodiments, to obtain not reflected light of laser light applied to a water surface obliquely below a sensor but infrared light coming from a water surface obliquely below a sensor is, for example, to obtain not reflected light of infrared laser light applied to a water surface obliquely below a sensor but infrared light irradiated from a water surface in accordance with the temperature of water obliquely below a sensor. The laser light is light with high directivity, and light from an illuminator mounted on the planing boat and flash light used for photographing by a camera are not the laser light. In the present teaching and the embodiments, when a sensor has directivity in an obliquely downward direction forming an angle of not larger than 45 degrees with a horizontal direction in a planing state of the planing boat, the orientation direction of the sensor which is the center of an imaging range of the sensor is obliquely downward and forms an angle of not larger than 45 degrees in the vertical direction relative to the horizontal direction, in the planing state of the planing boat.

In the present teaching and the specification, at least one of plural options encompasses all conceivable combinations of the options. At least one of plural options may be one of the options, some of the options, or all of the options. For example, at least one of A, B, or C indicates only A, only B, only C, A and B, A and C, B and C, or A, B, and C. In the present specification, A and/or B means A, B, or both A and B.

Unless otherwise defined, all terms (technical and scientific terms) used in this specification and claims indicate meanings typically understood by a person with ordinary skill in the art in the technical field to which the present teaching belongs. Terms such as those defined in commonly used dictionaries are to be interpreted as having meaning that is consistent with their meaning in the context of the relevant art and the present disclosure, and are not to be interpreted in an idealized or excessively formal sense.

As used herein, the term "preferred" is non-exclusive. The term "preferable" means "preferable but not limited to". In this specification, the term "may" is non-exclusive. "May be" means "may be but not limited to". In the present specification, "may" implicitly encompasses "do not".

Before the embodiments of the present teaching are detailed, it is informed that the present teaching is not limited to the configurations and layout of elements described below and/or shown in drawings. The present teaching is also applicable to embodiments other than the embodiments described later. The present teaching may be implemented as an embodiment other than the below-described embodiment.

### [Advantageous Effects]

A planing boat sailing assisting device of the present teaching makes it possible to secure the accuracy of observation of waves even if the waves are small and irregularly change in a short time, and to suppress reduction in degree of freedom in designing hardware resource.

### [Brief Description of Drawings]

FIG. 1 is a schematic diagram for explaining a planing boat sailing assisting device of First Embodiment of the present teaching.
FIG. 2 is a schematic diagram for explaining a planing boat sailing assisting device of Second Embodiment of the present teaching.
FIG. 3 is a flowchart showing steps of a process performed by a data processing apparatus of a planing boat sailing assisting device of Third Embodiment of the present teaching.
FIG. 4 is a drawing for explaining a process performed by a data processing apparatus of a planing boat sailing assisting device of Fourth Embodiment of the present teaching.
FIG. 5 shows a wave display which is configured to obtain wave data from a data processing apparatus of a planing boat sailing assisting device of Fifth Embodiment of the present teaching.

### [Description of Embodiments]

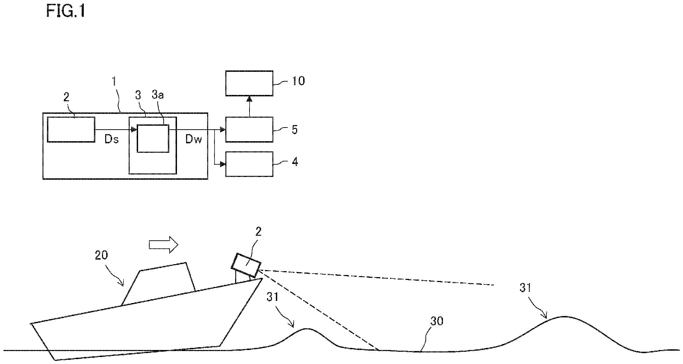

A planing boat sailing assisting device 1 of First Embodiment of the present teaching will be described with reference to FIG. 1. The planing boat sailing assisting device 1 is mounted on a planing boat 20. The planing boat 20 is a ship of the semi-planing type or the planing type. The planing boat sailing assisting device 1 includes a sensor 2 and a data processing apparatus 3. The data processing apparatus 3 includes a processor 3a. The sensor 2 is mounted on the planing boat 20. The sensor 2 is configured to sense a water surface 30 from the planing boat 20. By doing so, the sensor 2 senses, from the planing boat 20, waves 31. The data processing apparatus 3 includes an unillustrated storage unit. The processor 3a of the data processing apparatus 3 is configured to generate wave data Dw related to the waves 31 around the planing boat 20, based on sensor-obtained data Ds obtained by the sensor 2. The processor 3a of the data processing apparatus 3 outputs the generated wave data Dw to at least one of a wave display 4 or a controller 5. While in FIG. 1 the wave display 4 and the controller 5 are not included in the planing boat sailing assisting device 1, the wave display 4 and the controller 5 may be included in the planing boat sailing assisting device 1. Furthermore, while in FIG. 1 the wave data Dw is output to both the wave display 4 and the controller 5, the wave data Dw may be output to only the wave display 4 or the controller 5. The wave display 4 is configured to display information related to waves 31 in accordance with the wave data Dw, in order to assist the sailing of the planing boat 20. The controller 5 is configured to control a propulsion unit 10 provided in the planing boat 20 in accordance with the wave data Dw, in order to assist the sailing of the planing boat 20. The sensor 2 is an image sensor which is configured to obtain not reflected light of laser light applied to the water surface 30 obliquely below the sensor 2 but natural visible light or infrared light coming from the water surface 30 obliquely below the sensor 2, by means of a global shutter mechanism. In other words, the sensor-obtained data Ds obtained by the sensor 2 relates to natural visible light or infrared light coming from the water surface 30 obliquely below the sensor 2. The processor 3a of the data processing apparatus 3 is configured to obtain, at a frame rate of 10 FPS or higher and 100 FPS or lower, the sensor-obtained data Ds obtained by the sensor 2 so that at least one of a state in which waves 31 disappear due to mutual interference between the waves 31 or a state in which the waves 31 are amplified due to mutual interference between the waves 31 can be observed. The processor 3a of the data processing apparatus 3 may be configured to obtain, at a frame rate of 10 FPS or higher and 100 FPS or lower, the sensor-obtained data Ds obtained by the sensor 2 so that both of the state in which waves 31 disappear due to mutual interference between the waves 31 and the state in which the waves 31 are amplified due to mutual interference between the waves 31 can be observed. The processor 3a of the data processing apparatus 3 generates wave data Dw related at least to the height of a wave 31 obliquely below the sensor 2 and the time until arrival of this wave 31 at the planing boat 20, based on plural sets of sensor-obtained data Ds having been obtained. At least one set of wave data Dw is generated in every second. The processor 3a of the data processing apparatus 3 outputs the generated wave data Dw to at least one of the wave display 4 or the controller 5.

The planing boat sailing assisting device 1 of First Embodiment makes it possible to secure the accuracy of observation of the waves 31 even if the waves 31 are small and irregularly change in a short time, and to suppress reduction in degree of freedom in designing hardware resource of the data processing apparatus 3. The wave data Dw is related to the height of a wave 31 obliquely below the sensor 2 and the time until arrival of this wave 31 at the planing boat 20. Due to this, it is easy to utilize the wave data Dw for assisting the sailing of the planing boat 20 in order to deal with small waves 31 that irregularly change in a short time.

It is noted that these processes performed by the processor 3a of the data processing apparatus 3 are processes performed by the processor 3a of the data processing apparatus 3 in a particular situation. When there are few waves 31 on the water surface 30, the processor 3a of the data processing apparatus 3 may not generate wave data Dw even though the processor 3a obtains sensor-obtained data Ds. Furthermore, depending on the state of the water surface 30, the processor 3a of the data processing apparatus 3 may not output wave data Dw even though the processor 3a has generated the wave data Dw.

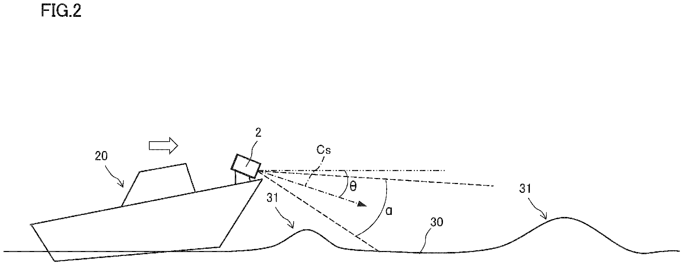

A planing boat sailing assisting device 1 of Second Embodiment of the present teaching will be described with reference to FIG. 2. The planing boat sailing assisting device 1 of Second Embodiment encompasses the features of First Embodiment. An arrow Cs in FIG. 2 indicates an orientation direction of the sensor 2. The orientation direction Cs of the sensor 2 is the center of the imaging range of the sensor 2. An angle θ in FIG. 2 is an example of an angle formed between the orientation direction Cs of the sensor 2 and the horizontal direction when the planing boat 20 is in a planing state. The angle θ is smaller than 45 degrees. The angle θ, however, is not limited to the angle shown in FIG. 2. In this way, the sensor 2 is mounted on the planing boat 20 so that the sensor is oriented obliquely downward within an angle of 45 degrees from the horizontal direction, when the planing boat 20 is in the planing state. This arrangement makes it possible to accurately detect small waves 31 from the sensor-obtained data Ds. Due to this, it is possible to accurately observe small waves 31 that irregularly change in a short time.

A horizontal imaging angle and a vertical imaging angle α (see FIG. 2) of the sensor 2 are preferably set at values with which small waves 31 distanced from the planing boat 20 by about 50 meters can be accurately detected. The larger the imaging angle is, the lower the accuracy of detection of waves 31 far from the planing boat 20 becomes. The horizontal imaging angle is an angle between the upper end and the lower end of the imaging range of the sensor 2. The vertical imaging angle α is an angle between the left end and the right end of the imaging range. The vertical imaging angle α, however, is not limited to the angle shown in FIG. 2.

The sensor 2 may be a stereo camera or a monocular camera. When the sensor 2 is a stereo camera, the processor 3a of the data processing apparatus 3 is able to calculate the distance from the sensor 2 to a wave 31 by utilizing a parallax between two images taken by two cameras. When the sensor 2 is a monocular camera, the processor 3a of the data processing apparatus 3 is able to calculate the distance from the sensor 2 to a wave 31 by utilizing, for example, lens aberration. When the sensor 2 is a stereo camera, it is possible to accurately detect small waves 31 from the sensor-obtained data Ds, as compared to a case where the sensor 2 is a monocular camera. Due to this, it is possible to further accurately observe small waves 31 that irregularly change in a short time.

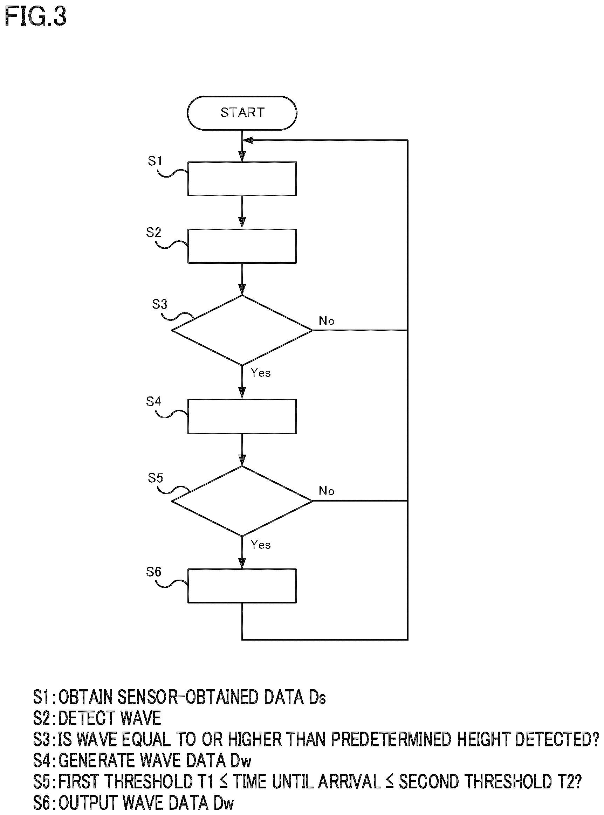

A planing boat sailing assisting device 1 of Third Embodiment of the present teaching will be described with reference to FIG. 3. The planing boat sailing assisting device 1 of Third Embodiment includes the features of First Embodiment or Second Embodiment. A processor 3a of a data processing apparatus 3 of the present embodiment outputs wave data Dw to a controller 5. FIG. 3 is a flowchart showing steps of a process performed by the processor 3a of the data processing apparatus 3 of the present embodiment.

The processor 3a obtains sensor-obtained data Ds from the sensor 2 (step S1). The flowchart shown in FIG. 3 expresses the steps in a simple manner for easy understanding. The step S1 may be performed without waiting for the end of, for example, a later-described step S6. The processor 3a obtains the sensor-obtained data Ds from the sensor 2 at a frame rate of 10 FPS or higher and 100 FPS or lower. The processor 3a may obtain the sensor-obtained data Ds at a frame rate of, for example, 10 FPS or higher and 40 FPS or lower. The processor 3a may obtain the sensor-obtained data Ds at a frame rate of, for example, 10 FPS or higher and 30 FPS or lower. The processor 3a may obtain the sensor-obtained data Ds at a frame rate of, for example, 10 FPS or higher and 15 FPS or lower. The processor 3a may obtain the sensor-obtained data Ds at a frame rate of, for example, 15 FPS or higher and 100 FPS or lower.

Based on the obtained sensor-obtained data Ds, the processor 3a detects a wave 31 which locates obliquely below the sensor 2 and is equal to or higher than a predetermined height (step S2). The planing boat 20 deals with small waves 31 that irregularly change in a short time. On this account, the predetermined height that is the minimum height of the wave 31 detected in the step S2 is preferably about 40 centimeters. When a wave 31 equal to or higher than the predetermined height is not detected (No in the step S3), the process goes back to the step S1.

When a wave 31 equal to or higher than the predetermined height is detected (Yes in the step S3), the processor 3a generates wave data Dw based on plural sets of obtained sensor-obtained data Ds (step S4). To be more specific, the processor 3a generates wave data Dw by calculating the time until arrival of a wave 31 equal to or higher than the predetermined height at the planing boat 20 and the height of this wave 31.

In the step S4, for example, the processor 3a calculates the time until arrival of the wave 31 based on two sets of sensor-obtained data Ds which are obtained by the sensor 2 at different timings. Based on the two sets of sensor-obtained data Ds obtained by the sensor 2 at different timings, it is possible to obtain relative speed of the wave 31 relative to the speed of the planing boat 20. Furthermore, based on a single set of sensor-obtained data Ds, it is possible to obtain the distance between the wave 31 and the planing boat 20. On this account, it is possible to predict the time until arrival of the wave 31 based on the two sets of sensor-obtained data Ds obtained by the sensor 2 at different timings. The calculation of the time until arrival of the wave 31 may be performed for all waves 31 detected in the step S2. The calculation of the time until arrival of the wave 31 may be performed for only one or more of the waves 31 detected in the step S2. To be more specific, for example, the processor 3a may calculate only the time until arrival of a wave 31 whose distance to the planing boat 20 is shorter than a predetermined distance. Furthermore, for example, the processor 3a may calculate the times until arrival of the respective waves 31 in the order of proximity to the planing boat 20, and when a time until arrival equal to or shorter than a threshold is calculated, the processor 3a may not calculate the times until arrival of waves 31 that are farther from the planing boat 20 than the wave 31 whose time until arrival is equal to or shorter than the threshold. The threshold may be two seconds, for example. The threshold may be three seconds, for example. When there is a wave 31 that is moving at about 17 km/h toward a planing boat 20 at a location distanced from the planing boat 20 by about 50 meters and the planing boat 20 is sailing at about 40 km/h, three seconds are equivalent to a time until arrival of the wave 31 at the planing boat 20. 40 km/h is a typical speed at which the planing boat 20 sails in a planing state. 17 km/h is a typical speed at which a wave 31 moves in an environment in which the planing boat 20 sails in the planing state. In the step S4, the calculation of the height of the wave 31 may be performed only for each wave 31 whose time until arrival has already been calculated. The calculation of the height of the wave 31 may be performed for all waves 31 detected in the step S2. The wave data Dw generated in the step S4 includes at least data indicating the time until arrival of a wave 31 and data indicating the height of the wave 31 associated with this time until arrival. The wave data Dw generated in the step S4 may include data indicating the time until arrival of a wave 31, data indicating the height of the wave 31 associated with this time until arrival, and data indicating the direction of the wave 31 relative to the planing boat 20. In other words, the wave data Dw may be related to the height of a wave 31, the time until arrival of the wave 31, and the direction of the wave 31 relative to the planing boat 20.

Subsequently, the processor 3a determines whether a time until arrival that is equal to or longer than a first threshold T1 and is equal to or shorter than a second threshold T2 has been calculated (step S5). When a time until arrival that is equal to or longer than the first threshold T1 and is equal to or shorter than the second threshold T2 has been calculated (Yes in the step S5), the processor 3a outputs, to the controller 5, a set of wave data Dw related to a wave 31 associated with the time until arrival that is equal to or longer than the first threshold T1 and is equal to or shorter than the second threshold T2 (step S6). The processor 3a does not output, to the controller 5, a set of wave data Dw related to a wave 31 whose time until arrival is shorter than the second threshold T2 and a set of wave data Dw related to a wave 31 whose time until arrival is longer than the first threshold T1. The first threshold T1 is set at a value equivalent to a time until arrival of a head wave, which is excessively close to the planing boat 20 and scarcely detectable by the sensor 2, at the planing boat 20 that is sailing in the planing state at a typical speed. The first threshold T1 is, for example, one second. The second threshold T2 is, for example, two seconds. The second threshold T2 may be equal to or smaller than the threshold that is used for determining whether to calculate a time until arrival in the step S4. When a time until arrival that is equal to or longer than the first threshold T1 and equal to or shorter than the second threshold T2 is not detected (No in the step S5), the process goes back to the step S1. The processor 3a of the data processing apparatus 3 performs the steps described above.

The steps performed by the processor 3a includes the steps S5 and S6. On this account, the processor 3a of the present embodiment determines whether to output generated wave data Dw to the controller 5 based on the generated wave data Dw. The planing boat 20 may not always make contact with the wave 31 detected in the step S2. The wave 31 may disappear before making contact with the boat. In the present embodiment, because only a set of wave data Dw related to a wave 31 that is likely to make contact with the boat is output to the controller 5, it is possible to reduce the processing load on the data processing apparatus 3 and the controller 5 while securing the function of assisting the sailing of the planing boat 20.

The controller 5 controls the propulsion unit 10 based on obtained wave data Dw. The controller 5 controls the propulsion unit 10 to control the acceleration and deceleration of the planing boat 20 based on data indicating the time until arrival of a wave 31 and data indicating the height of the wave 31, which are included in the obtained wave data Dw. The propulsion unit 10 may include an engine unit and a drive unit connected to the engine unit. The engine unit includes a throttle valve configured to adjust an amount of air supplied to a combustion chamber of the engine. When the propulsion unit 10 is arranged in this way, the controller 5 controls the acceleration and deceleration of the planing boat 20 by, for example, controlling a timing to change the opening degree of the throttle valve and the opening degree of the throttle valve. In this way, it is possible to utilize the wave data Dw output to the controller 5 for assisting the sailing of the planing boat 20 that deals with small waves 31 irregularly changing in a short time. When the wave data Dw output to the controller 5 relates also to the direction of a wave 31 relative to the planing boat 20, the controller 5 may control the acceleration and deceleration and the steering of the planing boat 20 in accordance with the wave data Dw. When the wave data Dw output to the controller 5 relates to the height of a wave 31, the time until arrival of the wave 31, and the direction of the wave 31 relative to the planing boat 20, it is easier to utilize the wave data Dw output to the controller 5 for assisting the sailing of the planing boat 20 that deals with small waves 31 irregularly changing in a short time.

In Third Embodiment, the calculation of the height of a wave 31 may be performed in the step S2 instead of the step S4. In Third Embodiment, the processor 3a may not calculate the height of a wave 31. In other words, the generated wave data Dw may not include data indicating the height of a wave 31. The wave data Dw relates to the height of a wave 31 and the time until arrival of the wave also in this case, because the data relates to the time until arrival of a wave 31 that is higher than the predetermined height. However, when the wave data Dw includes data of the height of a wave 31, the wave data Dw output to the controller 5 is more suitably used for assisting the sailing of the planing boat 20 dealing with small waves irregularly changing in a short time

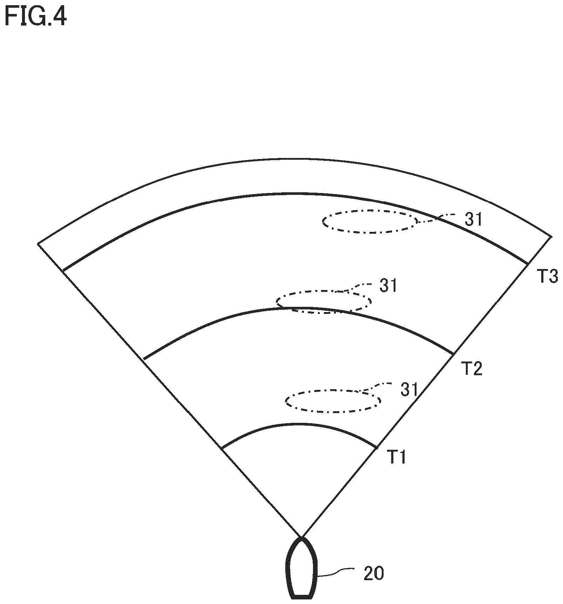

A planing boat sailing assisting device 1 of Fourth Embodiment of the present teaching will be described with reference to FIG. 4. The planing boat sailing assisting device 1 of Fourth Embodiment includes the features of First Embodiment or Second Embodiment. In the same manner as in Third Embodiment, a processor 3a of a data processing apparatus 3 of the present embodiment outputs wave data Dw to a controller 5.

In the same manner as in Third Embodiment, based on the sensor-obtained data Ds obtained from a sensor 2, the processor 3a detects a wave 31 which locates obliquely below the sensor 2 and is equal to or higher than a predetermined height. When a wave 31 that is equal to or higher than the predetermined height is detected, the processor 3a tracks the wave 31 that is equal to or higher than the predetermined height based on obtained sets of sensor-obtained data Ds, and generates wave data Dw. To be more specific, the processor 3a determines whether waves 31 detected from the sets of sensor-obtained data Ds are identical. When the waves 31 are identical, the processor 3a tracks the wave 31 by, for example, mutually associating the direction of the wave 31 relative to the planing boat 20 with the moving direction of the wave 31 relative to the planing boat 20. Depending on the situation of a water surface 30, the processor 3a tracks plural waves 31 in a parallel manner. The processor 3a generates wave data Dw by calculating the time until arrival of the tracked wave 31 at the planing boat 20 and the height of this wave 31. The generated wave data Dw includes data indicating the time until arrival of a wave 31, data indicating the height of the wave 31 associated with this time until arrival, and data indicating the direction of the wave 31 relative to the planing boat 20 and the moving direction of the wave 31 relative to the planing boat 20. In other words, the wave data Dw generated in Fourth Embodiment is related to the height of a wave 31, the time until arrival of the wave 31, the direction of the wave 31 relative to the planing boat 20, and the moving direction of the wave 31 relative to the planing boat 20. The tracking may be performed for only a wave 31 whose time until arrival is equal to or shorter than a third threshold T3. The third threshold T3 is, for example, three seconds. The third threshold T3 is larger than a later-described second threshold T2. FIG. 4 shows the relationship between waves 31 tracked at a given moment and the times until arrival.

When the time until arrival of a tracked wave 31 is equal to or longer than the first threshold T1 and equal to or shorter than the second threshold T2, the processor 3a outputs a set of wave data Dw related to this wave 31 to the controller 5. When the time until arrival of a wave 31 at the moment of starting the tracking is longer than the second threshold T2, the processor 3a starts the output of a set of wave data Dw related to this wave 31 when the time until arrival of the wave 31 becomes equal to or shorter than the second threshold T2. The output of the set of wave data Dw related to this wave 31 is continued until the time until arrival of the wave 31 becomes equal to or shorter than the first threshold T1. However, the wave 31 may disappear before the time until arrival becomes equal to or shorter than the second threshold T2 or before the time until arrival becomes shorter than the first threshold T1. In the same manner as the first threshold T1 of Third Embodiment, the first threshold T1 is set at a value equivalent to a time until arrival of a head wave that is excessively close to the planing boat 20 and scarcely detectable by the sensor 2 at the planing boat 20 that is sailing in the planing state at a typical speed. The first threshold T1 is, for example, one second. The second threshold T2 is, for example, two seconds.

In the same manner as in Third Embodiment, the processor 3a of the present embodiment determines whether to output generated wave data Dw to the controller 5 based on the generated wave data Dw. On this account, it is possible to reduce the processing load on the data processing apparatus 3 and the controller 5 while securing the function of assisting the sailing of the planing boat 20. Furthermore, because the wave data Dw of the present embodiment relates to the height of a wave 31, the time until arrival of the wave 31, and the direction of the wave 31 relative to the planing boat 20 and the moving direction of the wave 31 relative to the planing boat 20, it is easier to utilize the wave data Dw output to the controller 5 for assisting the sailing of the planing boat 20 that deals with small waves 31 irregularly changing in a short time.

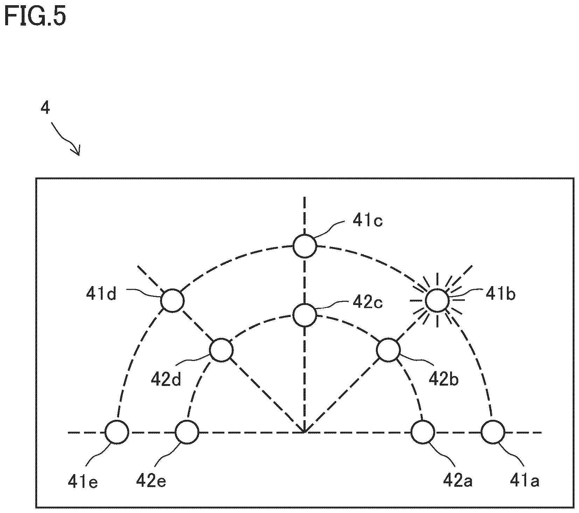

A planing boat sailing assisting device 1 of Fifth Embodiment of the present teaching will be described with reference to FIG. 5. The planing boat sailing assisting device 1 of Fifth Embodiment includes the features of at least one of First Embodiment to Fourth Embodiment. A processor 3a of a data processing apparatus 3 of the present embodiment outputs wave data Dw to a wave display 4.

In the same manner as in Third Embodiment and Fourth Embodiment, based on the sensor-obtained data Ds obtained from a sensor 2, the processor 3a detects a wave 31 which locates obliquely below the sensor 2 and is equal to or higher than a predetermined height. In the same manner as in Fourth Embodiment, when a wave 31 that is equal to or higher than the predetermined height is detected, the processor 3a tracks the wave 31 that is equal to or higher than the predetermined height based on obtained sets of sensor-obtained data Ds, and generates wave data Dw. However, the wave data Dw generated in Fifth Embodiment may not include data indicating the height of a wave 31. The wave data Dw generated in Fifth Embodiment includes at least data indicating the time until arrival of a wave 31 that is equal to or higher than a predetermined height and data indicating the direction of the wave 31 relative to the planing boat 20. On this account, the wave data Dw generated in Fifth Embodiment is related at least to the height of a wave 31, the time until arrival of the wave 31, and the direction of the wave 31 relative to the planing boat 20. In the same manner as in Fourth Embodiment, the tracking may be performed for only a wave 31 whose time until arrival is equal to or shorter than a third threshold T3. The third threshold T3 is, for example, three seconds. The third threshold T3 may be identical with the third threshold T3 of Third Embodiment and Fourth Embodiment.

When the time until arrival of a tracked wave 31 is changed from a value larger than the second threshold T2 to a value equal to or smaller than the second threshold T2, the processor 3a outputs a set of wave data Dw related to this wave 31 to the wave display 4. The second threshold T2 is, for example, two seconds. The second threshold T2 may be identical with the second threshold T2 of Third Embodiment and Fourth Embodiment. The processor 3a of the present embodiment determines whether to output generated wave data Dw to the controller 5 based on the generated wave data Dw. On this account, it is possible to reduce the processing load on the data processing apparatus 3 and the wave display 4 while securing the function of assisting the sailing of the planing boat 20.

The wave display 4 is configured to display information in accordance with obtained wave data Dw. At least one wave display 4 is mounted on the planing boat 20 to be easily viewable by an operator and/or an occupant who is not an operator. As the wave display 4 displays information in accordance with the wave data Dw, the wave data Dw output to the wave display 4 is suitably used for assisting the sailing of the planing boat 20 dealing with small waves 31 irregularly changing in a short time.

FIG. 5 shows an example of the wave display 4. The following will describe contents displayed on the wave display 4 shown in FIG. 5. The wave display 4 has 10 lights 41a to 41e and 42a to 42e. The lights 41a to 41e indicate waves 31 whose times until arrival at the planing boat 20 are longer than times until arrival of those indicated by the lights 42a to 42e. The lights 41a to 41e indicate waves 31 that are different from one another in terms of the direction of the wave 31 relative to the planing boat 20. The same applies to the lights 42a to 42e. The lights 41a and 42a indicate waves 31 that are in the vicinity of the right end of the imaging range of the image sensor 2. The lights 41e and 42e indicate waves 31 that are in the vicinity of the left end of the imaging range of the image sensor 2.

Upon acquisition of wave data Dw, the wave display 4 turns on one of the lights 41a to 41e for a predetermined time, in accordance with the direction of the wave 31 relative to the planing boat 20. FIG. 5 shows a state in which the light 41b is turned on. The turn-on time of each of the lights 41a to 41e may be a predetermined time (e.g., one second) or may be set in accordance with the wave data Dw. After turning on one of the lights 41a to 41e for a predetermined time, the wave display 4 causes one of the lights 42a to 42e, which is identical in the direction relative to the planing boat 20, to flicker for a predetermined time. For example, after the light 41b is turned on, the light 42b flickers. The duration of flickering of each of the lights 42a to 42e may be, for example, a duration from the start of flickering of each of the lights 42a to 42e to the contact between the planing boat 20 and a wave 31. This duration is calculated based on the time until arrival included in the wave data Dw.

Because information of waves 31 is represented by the lights 41a to 41e and 42a to 42e, a user (an operator or an occupant who is not an operator) can promptly understand the information even in a shaky environment, as compared to cases where information of waves 31 is represented by numbers or moving pictures. The wave display 4 does not turn on lights corresponding to plural waves 31 simultaneously. This turning on encompasses flickering. This arrangement allows the user to promptly understand the information even in a shaky environment. Because each of the lights 41a to 41e is continuously turned on whereas each of the lights 42a to 42e flickers, the user is able to promptly understand the information even in a shaky environment. The lights 41a to 41e may be different in color from the lights 42a to 42e. The difference in color of the lights allows the user to promptly understand the information even in a shaky environment. In this case, both of the group of the lights 41a to 41e and the group of the lights 42a to 42e are continuously turned on or flicker.

A planing boat sailing assisting device 1 of Sixth Embodiment of the present teaching will be described below. The planing boat sailing assisting device 1 of Sixth Embodiment includes the features of at least one of First Embodiment to Fourth Embodiment. A processor 3a of a data processing apparatus 3 of the present embodiment outputs wave data Dw to a wave display 4.

In the same manner as in Third to Fifth Embodiments, based on the sensor-obtained data Ds obtained from a sensor 2, the processor 3a detects a wave 31 which locates obliquely below the sensor 2 and is equal to or higher than a predetermined height. When a wave 31 equal to or higher than the predetermined height is detected, the processor 3a generates wave data Dw based on plural sets of obtained sensor-obtained data Ds. In the same manner as in Third Embodiment, the tracking of waves 31 is not performed in the present embodiment. The wave data Dw generated in Sixth Embodiment may not include data indicating the height of a wave 31. The wave data Dw generated in Sixth Embodiment preferably includes data indicating the direction of a wave 31 relative to the planing boat 20, but may not include this data. The wave data Dw generated in Sixth Embodiment includes at least data indicating the time until arrival of a wave 31 that is equal to or higher than a predetermined height. On this account, the wave data Dw generated in Sixth Embodiment is related at least to the height of a wave 31 and the time until arrival of the wave 31.

The processor 3a outputs, to the wave display 4, wave data Dw related to a wave 31 whose time until arrival is equal to or longer than a first threshold T1 and equal to or shorter than a second threshold T2. Alternatively, the processor 3a outputs, to the wave display 4, wave data Dw related to a wave 31 whose time until arrival is close to the second threshold T2. According to these arrangements, when the processor 3a is configured to calculate a time until arrival longer than the second threshold T2 and generates wave data, the processor 3a determines whether to output generated wave data Dw to the controller 5 based on the generated wave data Dw. On this account, it is possible to reduce the processing load on the data processing apparatus 3 and the wave display 4 while securing the function of assisting the sailing of the planing boat 20. The first threshold T1 is, for example, one second. The first threshold T1 may be identical with the second threshold T2 of Third Embodiment and Fourth Embodiment. The second threshold T2 is, for example, two seconds. The second threshold T2 may be identical with the second threshold T2 of Third Embodiment to Fifth Embodiment.

The wave display 4 is configured to display information in accordance with obtained wave data Dw. As the wave display 4 displays information in accordance with the wave data Dw, the wave data Dw output to the wave display 4 is suitably used for assisting the sailing of the planing boat 20 dealing with small waves 31 irregularly changing in a short time. The wave display 4 may be a wave display 4 having lights 41a to 41e and 42a to 42e shown in FIG. 5, or may be a wave display 4 having different display means.

For example, the wave display 4 may be configured to display the relationship between the position and the time until arrival of a wave 31 as shown in FIG. 4. In this case, the processor 3a may output all sets of generated wave data Dw to the wave display 4. Alternatively, the processor 3a outputs, to the wave display 4, wave data Dw related to a wave 31 whose time until arrival is equal to or longer than the first threshold T1 and equal to or shorter than the third threshold T3. The third threshold T3 is, for example, three seconds.

The present teaching is not limited to the above-described embodiment, and various changes can be made within the scope of the claims.

The processor of the data processing apparatus of the present teaching may output data that is related to a wave, is generated based on at least one set of sensor-obtained data, and is not equivalent to the wave data of the present teaching, in addition to the wave data of the present teaching. In other words, the processor may output data that is not related to at least one of the height of a wave or the time until arrival of the wave to at least one of the wave display or the controller. The data that is not related to at least one of the height of a wave or the time until arrival of the wave may be, for example, data indicating that a wave equal to or higher than a predetermined height has been detected.

### [Reference Signs List]

1 planing boat sailing assisting device
2 sensor
3 data processing apparatus
3a processor
4 wave display
5 controller
10 propulsion unit
20 planing boat
30 water surface
31 wave
Cs orientation direction
Ds sensor-obtained data
Dw wave data

## Claims

1. A planing boat sailing assisting device comprising:
a sensor which is mounted on a planing boat and is configured to sense, from the planing boat, waves; and
a data processing apparatus which is configured to generate wave data related to the waves around the planing boat based on data obtained by the sensor and output the wave data to at least one of a wave display or a controller, the wave display being configured to display information related to the waves in accordance with the wave data to assist sailing of the planing boat, and the controller being configured to control a propulsion unit of the planing boat in accordance with the wave data to assist the sailing of the planing boat,
the sensor being an image sensor which is configured to obtain not reflected light of laser light applied to a water surface obliquely below the sensor but natural visible light or infrared light coming from the water surface obliquely below the sensor, by means of a global shutter mechanism, and
the data processing apparatus including a processor which is configured to (i) obtain, at a frame rate of equal to or higher than 10 FPS and equal to or lower than 100 FPS, sensor-obtained data obtained by the sensor and related to the natural visible light or infrared light coming from the water surface obliquely below the sensor so that at least one of a state in which the waves disappear due to mutual interference between the waves or a state in which the waves are amplified due to mutual interference between the waves is observable, (ii) based on obtained sets of the sensor-obtained data, generate the wave data related at least to the height of a wave obliquely below the sensor and a time until arrival of the wave at the planing boat, at least once in every second, and (iii) output the generated wave data to at least one of the wave display or the controller.

2. The planing boat sailing assisting device according to claim 1, wherein, the sensor is mounted on the planing boat so that the sensor is oriented obliquely downward within an angle of 45 degrees from a horizontal direction, when the planing boat is in a planing state.

3. The planing boat sailing assisting device according to claim 1 or 2, wherein, the sensor is a stereo camera.

4. The planing boat sailing assisting device according to any one of claims 1 to 3, wherein, the processor of the data processing apparatus is configured to output, to at least one of the wave display or the controller, the wave data related to at least one of the height of the wave obliquely below the sensor, the time until arrival of the wave at the planing boat, and a direction of the wave relative to the planing boat.

5. The planing boat sailing assisting device according to any one of claims 1 to 4, wherein, the processor of the data processing apparatus is configured to determine whether to output the generated wave data to at least one of the wave display or the controller, based on the generated wave data.
